# FASCICULE DE BREVET EUROPEEN

(11) **EP 1 601 074 B1**
(45) Date de publication et mention de la délivrance du brevet: **11.04.2007**
(21) Numéro de dépôt: 05103996.4
(22) Date de dépôt: 12.05.2005
(51) Int. Cl.: H02B 1/30, H05K 7/18, H02B 1/01

(54) **Armoire électrique à profilés d'ossature**
Schaltschrank mit Rahmenprofilen
Electrical cabinet with framework section pieces

(30) Priorité: 28.05.2004 FR 0405771
(43) Date de publication de la demande: 30.11.2005
(73) Titulaire: Hispano Mecano Electrica S.A., 08786 Capellades (Barcelona) (ES)
(72) Inventeur: Castillo Garcia, Fernando, 08780 Barcelone (ES); Forcadell Carapuig, Jordi, 43550 Tarragone (ES); Macarilla Jover, Albert, 08950 Barcelone (ES); Xaus Regordosa, Lluis, 08700 Igualada-Barcelona (ES)
(74) Mandataire: Bié, Nicolas

(56) Documents cités:
- EP-A- 0 422 283
- WO-A-03/105552
- DE-A1- 1 753 038
- DE-U1- 8 107 658
- US-B1- 6 231 142

## Description

La présente invention concerne une armoire pour appareils électriques, comportant une ossature formée par assemblage de profilés, et des parois fixes ou ouvrantes rattachées à cette ossature.

Les ossatures d'armoires électriques se composent de profilés métalliques de bonne rigidité, généralement obtenus à partir de bandes de tôle, pliées et perforées pour assurer la fixation des parois et d'accessoires de montage.

Des profilés pour armoire sont décrits dans le document US 6,231,142. La forme de ces profilés est étudiée de manière à éviter le perçage de son noyau principal sur son côté donnant vers l'extérieur de l'armoire, ceci dans le but d'améliorer l'étanchéité de l'armoire. Pour cela le profilé comporte des pattes s'étendant vers l'extérieur de l'armoire et comportant des trous pour fixer différents éléments. Ces pattes sont réalisées en superposant deux parois du profilé.

Le document WO 03/105552 décrit des profilés pour armoire réalisés également pour améliorer l'étanchéité de l'armoire vis-à-vis du milieu extérieur. Un profilé est formé d'une seule paroi pliée de manière à former un noyau principal fermé de section carrée et trois branches se raccordant au noyau principal. Deux de ces branches prolongent deux côtés adjacents du noyau principal et une branche centrale prolonge l'un des deux autres côtés. Les extrémités libres des deux branches latérales sont repliées vers l'intérieur parallèlement au côté adjacent du noyau principal et forment des pattes de fixation.

Dans ces deux documents, l'objectif est donc d'améliorer l'étanchéité de l'armoire électrique. Or il est connu que les ossatures d'armoires pour appareils ou organes électriques doivent également être particulièrement robustes.

Les documents EP 402 276 et DE 41 32 803 décrivent ainsi des profilés qui sont assemblables pour constituer des ossatures d'armoires électriques, ces profilés ayant une forme générale triangulaire. Les profilés antérieurs ont l'avantage d'avoir une forme qui est simple et nécessite peu de pliages du flan de tôle. Ils ont toutefois une rigidité trop faible. En particulier, les profilés des montants ont une résistance trop faible au vrillage (un tel vrillage se produit par exemple lors de la fermeture des portes). Autrement dit, la simplicité de conception des profilés connus a pour contrepartie une rigidité insuffisante de l'ossature. De même, l'assemblage de deux armoires (cellules) voisines n'est pas satisfaisant, car les joints intermédiaires prévus entre les profilés adjacents des deux armoires risquent d'être écrasés lors de l'accouplement, et l'assemblage de portes sur deux côtés voisins de l'armoire est problématique.

L'invention a pour but de remédier à ces inconvénients en privilégiant la rigidité, notamment au vrillage, d'un profilé pour ossature d'armoire électrique, aussi bien dans l'application à une armoire isolée que dans l'application à des armoires jumelées, et en permettant des montages simples et très variés de parois et d'accessoires.

Selon l'invention, la section transversale de certains au moins des profilés de l'ossature a la forme d'une patte d'oie comprenant un noyau principal polygonal et trois branches qui se raccordent au noyau principal,
- les branches de la patte d'oie sont dirigées vers l'extérieur de l'armoire,
- les deux branches latérales sont sensiblement perpendiculaires entre elles,
- la branche centrale se développe vers l'extérieur par un noyau externe raidisseur creux et fermé.

Il en résulte que les moments d'inertie du profilé d'ossature, considérés selon les différents axes, sont globalement supérieurs à ceux des profilés connus, et que la résistance du profilé au vrillage est grandement accrue.

Les termes "interne", "intérieur" et "externe", "extérieur" sont utilisés ici en relation avec le volume interne de l'armoire.

De préférence, pour simplifier l'assemblage et le montage de parois ou d'accessoires propres à l'armoire, le profilé présente un plan de symétrie dans lequel est située la branche centrale de la patte d'oie. La présence du plan de symétrie permet également de pouvoir monter de manière identique et facilement une porte suivant n'importe quelle face de l'armoire.

Préférentiellement, le noyau principal a une section sensiblement carrée dont la diagonale est située dans le plan de symétrie.

Selon l'invention, la localisation centrifuge du noyau externe raidisseur et l'alignement des noyaux interne et externe selon le plan précité, orienté sensiblement du centre vers l'extérieur de l'armoire, assure une excellente résistance au vrillage du profilé.

Le noyau externe raidisseur peut avoir une section sensiblement carrée et plus petite que celle du noyau principal. La branche centrale peut avantageusement comprendre deux ailes qui sont jointives (le noyau externe raidisseur est alors fermé), tandis que les branches latérales peuvent présenter des ailes séparées l'une de l'autre de manière à définir vers l'extérieur une facette d'application pour une paroi fixe ou ouvrante de l'armoire. Le noyau externe raidisseur peut être en avancée vers l'extérieur par rapport aux facettes, l'avancée étant supérieure à l'épaisseur de la paroi. L'accouplement d'armoires est alors rendu plus fiable, notamment en ce qui concerne l'étanchéité à réaliser entre les profilés accouplés.

Le noyau externe raidisseur définit avantageusement entre lui-même et la face en regard de chaque branche latérale de la patte d'oie un logement sensiblement trapézoïdal et ouvert par sa base vers l'extérieur, le logement étant ménagé pour recevoir des accessoires de fixation de parois fixes ou ouvrantes et des bords de ces parois. En particulier si le profilé est de forme symétrique, ceci permet notamment de monter des portes sur deux faces adjacentes de l'armoire. La paroi peut offrir par exemple un bord rabattu à 90°, voire un bord rabattu à 180° en combinaison avec des vis noyées, qui s'insère dans le logement sensiblement trapézoïdal.

La description détaillée qui suit, en regard des dessins annexés, illustre un mode de réalisation donné à titre d'exemple.
La figure 1 est une vue schématique en perspective éclatée d'une armoire selon l'invention.
La figure 2 est une perspective partielle d'un angle de l'armoire, vu de l'extérieur.
La figure 3 est une perspective partielle de l'angle, vu de l'intérieur.
La figure 4 est une vue de côté d'un profilé de l'armoire.
Les figures 5 et 6 montrent le profilé en perspective, vu de l'extérieur et respectivement de l'intérieur.
La figure 7 montre en perspective une variante de réalisation du profilé.
La figure 8 est une section droite du profilé.
La figure 9 illustre par une vue similaire l'assemblage de deux armoires selon l'invention.
La figure 10 montre de même le profilé, dans le cas où il sert au montage de deux portes.
La figure 11 montre en section droite une autre forme d'exécution du profilé.

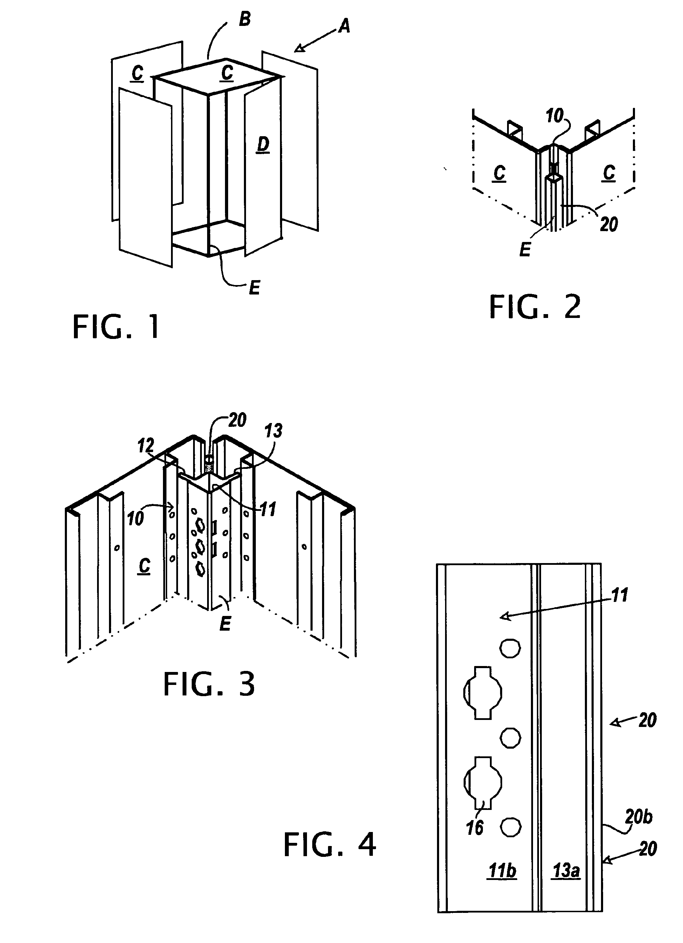

L'armoire A illustrée figure 1 comprend une ossature B, et des parois fixes de toit, de fond ou latérales C et au moins une paroi ouvrante telle qu'une porte D. L'ossature B se compose de montants verticaux profilés E assemblés en haut et en bas à des cadres spécifiques ou à des profilés horizontaux E identiques.

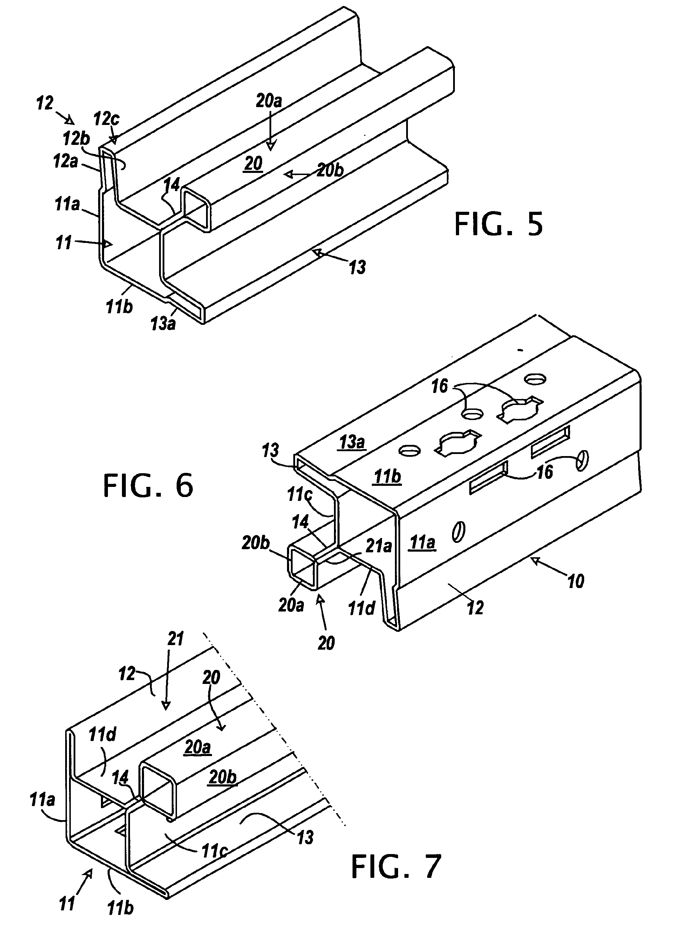

Selon l'invention, chaque profilé E a une section transversale en forme de patte d'oie 10 comprenant un noyau principal 11, des branches latérales 12,13 et une branche centrale 14. Le noyau principal 11 est de forme carrée, comprenant des côtés internes (c'est-à-dire vers l'intérieur de l'armoire) 11 a, 11 b et des côtés externes 11 c, 11 d (vers l'extérieur de l'armoire). Le profilé est symétrique par rapport à un plan diagonal P du noyau 11 et la branche centrale 14 est située dans ce plan. Les branches latérales 12,13 font entre elles un angle supérieur à 90° (voir figures 5 et 6) ou égal à 90° (figure 7). Les trois branches 12,13,14 de la patte d'oie 10 se raccordent à trois sommets du noyau principal carré 11. La branche centrale 14 se développe vers l'extérieur de l'armoire par un noyau externe raidisseur 20, en quelque sorte en position centrifuge, ce noyau ayant une section plus petite que le noyau principal 11. Le noyau externe 20 raidisseur est creux et sa section définit donc un espace interne sur toute la longueur du profilé. Le noyau externe raidisseur 20, en position centrifuge selon P relativement au noyau 11, a par exemple une forme carrée présentant du côté extérieur des faces planes 20a,20b parallèles aux côtés 11 a, 11 b du noyau principal 11 et du côté intérieur des faces planes 20c,20d ; les faces extérieures 20a,20b du noyau externe raidisseur restent apparentes quand l'armoire est montée et fermée, et servent d'appui lors de la juxtaposition de deux armoires, comme il sera expliqué plus loin. Le noyau externe raidisseur 20 peut aussi être arrondi vers l'extérieur.

Il convient d'observer que le noyau externe raidisseur 20 est fermé, et les ailes 14a,14b avantageusement jointives, pour dégager deux logements 21 trapézoïdaux, notamment pentagonaux, de grandes dimensions, afin de loger des bords rabattus de parois et/ou des accessoires de fixation. Il convient d'observer que le profilé E peut être obtenu par extrusion ; de préférence, il est réalisé par pliage d'un flan de tôle pour engendrer le noyau principal 11, les branches latérales 12,13, les ailes 14a,14b de la branche centrale 14 et le noyau externe raidisseur 20. Une interruption correspondant à la jonction des bords du flan replié est prévue par exemple dans l'aile 14a.

Il est prévu entre les côtés internes 11 a,11 b du noyau principal 11 et les branches latérales adjacentes 12,13 de la patte d'oie 10 un décrochement 15 contribuant à la rigidité du profil. Des rangées régulières d'orifices de fixation 16 pour des châssis, traverses, accessoires, etc .. sont ménagées de manière classique dans les côtés 11 a,11 b du noyau principal 11 et quelques trous taraudés 17 sont prévus dans les côtés 11c,11d du noyau 11 pour permettre d'assembler des parois de l'armoire au profilé E.

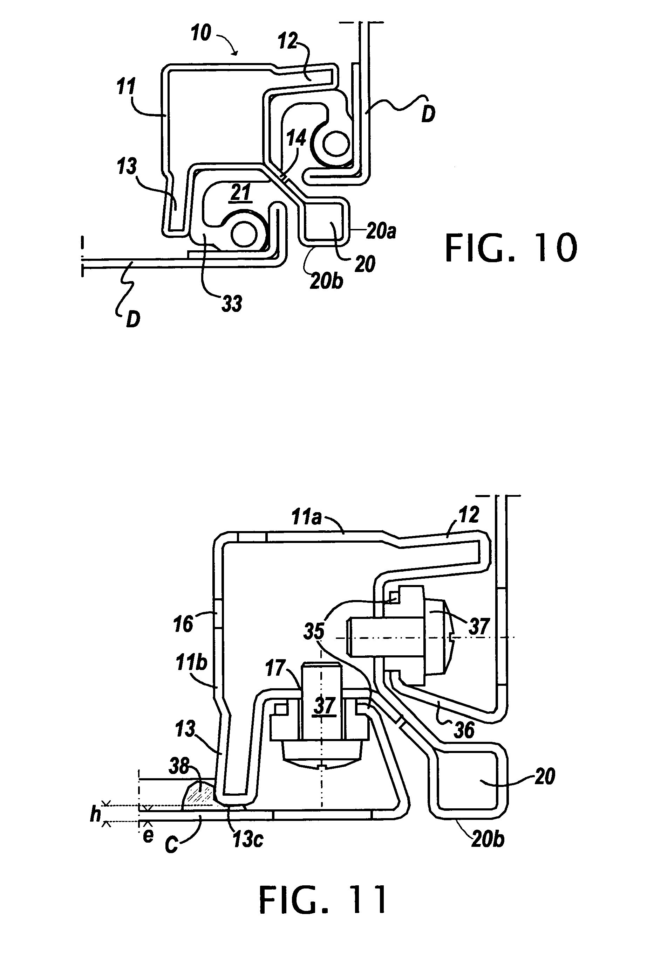

Les branches latérales 12,13 peuvent être légèrement ouvertes comme on le voit aux figures 5 et 6 pour améliorer la tenue à la corrosion, ou rester écrasées comme on le voit figure 7. Dans le premier cas, elles forment des ailes séparées sensiblement parallèles 12a,12b, respectivement 13a,13b, raccordées entre elles par une facette étroite 12c, respectivement 13c, apte à l'application d'un joint continu d'étanchéité (voir par exemple le joint 38 figure 11).

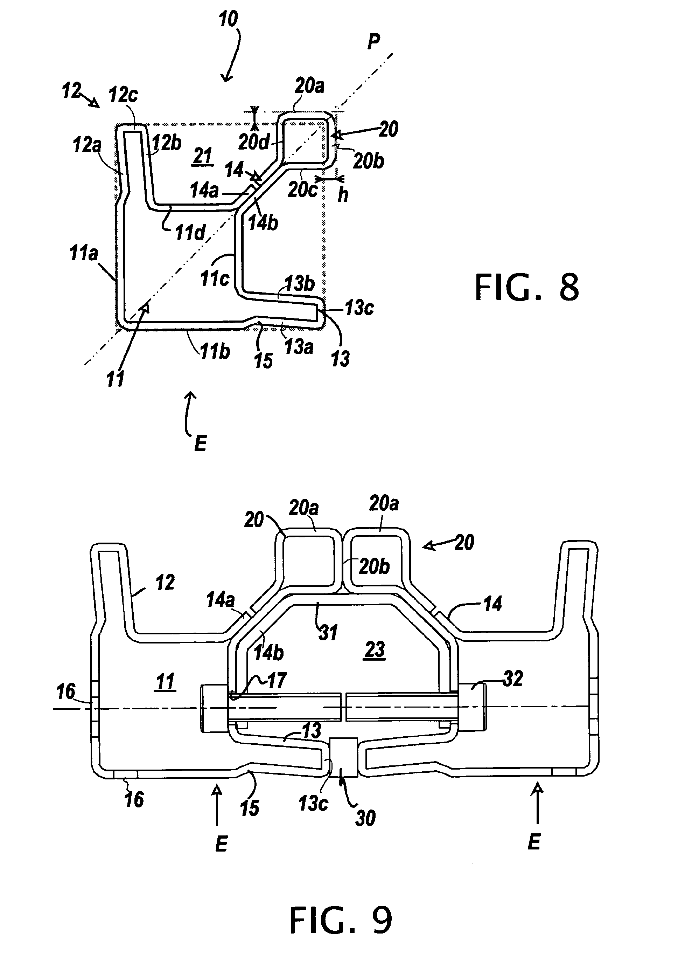

La patte d'oie 10 peut être telle que le noyau externe raidisseur 20 dépasse du contour carré défini par le noyau principal 11 et les branches latérales 12,13 (voir figure 8). Ceci permet en particulier d'améliorer l'assemblage d'armoires ou de cellules voisines, comme illustré figure 9. Les profilés E de cellules voisines sont rapprochés mutuellement jusqu'à butée de leurs faces en regard 20b (figure 9). Il reste alors entre les branches 13 des deux profilés juxtaposés un espace permettant de réaliser ou placer un joint intermédiaire d'étanchéité 30 sans risque d'écrasement. On réalise ainsi une double étanchéité vis à vis de l'extérieur, d'abord par l'aboutement des noyaux externes 20 et ensuite par l'interposition du joint 30 entre les branches 13, et l'on crée à l'intérieur des profilés, par la juxtaposition des logements trapézoïdaux 21 désormais isolés de l'extérieur, un espace de détente 23. L'assemblage des profilés E est complété par des pièces d'accouplement 31 en forme générale de U adaptée à celle des logements 21. Les pièces 31 épousent la forme des côtés externes 11c des noyaux 11, des ailes 14b des branches centrales des pattes d'oie et des côtés internes 20c des noyaux externes 20. Les pièces d'accouplement 31 sont serrées par des boulons 32 introduits dans des trous taraudés 17 des côtés 11c et accessibles à des outils par les orifices 16 ménagés dans les côtés opposés 11a.

Comme on le voit figure 10, les logements trapézoïdaux 21 peuvent servir à loger des charnières 33 lorsqu'on veut rapporter deux portes D sur des côtés adjacents du noyau principal carré 11. La charnière 33 se loge dans la partie rectangulaire du trapèze rectangle du logement 21, via des vis fixées dans les trous 17, et le bord 34 de la porte D, ici rabattu à angle droit, se loge dans la partie triangulaire du trapèze. Dans la variante illustrée figure 11, le bord 35 de la paroi est plié en retour à 180° pour occuper la majeure partie de l'espace pentagonal 21 ; le panneau de la paroi est relié au bord en retour 35 par une face oblique en retour 36 et la paroi est assemblée au moyen de vis 37 noyées et fixées dans les trous taraudés 17. On notera que (figure 11) la surface extérieure de la paroi C peut affleurer avantageusement le côté 20a (ou 20b) du noyau externe 20.

Dans une variante non représentée, le noyau externe raidisseur 20 reste dans le contour carré, ou en deçà du contour carré, défini par le noyau principal 11 et les branches latérales 12,13 qui prolongent les côtés de ce noyau. Une paroi fixe C ou ouvrante D peut alors recouvrir par son panneau un côté 20a (ou 20b) du noyau 20 et par un bord rabattu tel que le bord 34 l'autre côté 20b (ou 20a) du noyau.

## Revendications

1. Armoire pour appareils électriques, comportant une ossature formée par assemblage de profilés, la section de certains au moins des profilés *étant **caractérisé*** ayant la forme d'une patte d'oie (10) comprenant un noyau principal interne polygonal (11) et trois branches (12,13,14) qui se raccordent au noyau principal,
- les branches de la patte d'oie (10) sont dirigées vers l'extérieur de l'armoire,
- les deux branches latérales (12,13) sont sensiblement perpendiculaires entre elles,
- la branche centrale (14) se développe vers l'extérieur par un noyau externe raidisseur (20) en ce qu'il est fermé et creux.

2. Armoire selon la revendication 1, **caractérisée par le fait que** le profilé présente un plan de symétrie (P) dans lequel est située la branche centrale (14) de la patte d'oie (10).

3. Armoire selon la revendication 2, **caractérisé par le fait que** le noyau principal (11) et le noyau externe raidisseur (20) sont alignés suivant le plan de symétrie (P).

4. Armoire selon la revendication 2 ou 3, **caractérisé par le fait que** le noyau principal (11) a une section sensiblement carrée dont la diagonale est située dans le plan de symétrie.

5. Armoire selon la revendication 1, **caractérisée par le fait que** le noyau externe raidisseur (20) a une section sensiblement carrée et plus petite que celle du noyau principal (11).

6. Armoire selon la revendication 1, **caractérisée par le fait que** la branche centrale (14) comprend deux ailes (14a,14b) qui sont jointives.

7. Armoire selon la revendication 1, **caractérisée par le fait que** les branches latérales (12,13) présentent des ailes (12a,12b,13a,13b) séparées l'une de l'autre de manière à définir vers l'extérieur une facette d'application (12c,13c) pour une paroi fixe ou ouvrante de l'armoire et le noyau externe raidisseur (20) est en avancée vers l'extérieur par rapport aux facettes, l'avancée (h) étant supérieure à l'épaisseur (e) de la paroi.

8. Armoire selon la revendication 1, **caractérisée par le fait que** le noyau externe raidisseur (20) définit entre lui-même et la face en regard (12b,13b) de chaque branche latérale (12,13) de la patte d'oie (10) un logement (21) sensiblement trapézoïdal et ouvert par sa base vers l'extérieur, le logement étant ménagé pour recevoir des accessoires de fixation de parois fixes ou ouvrantes et des bords de ces parois.

9. Armoire selon la revendication 8, **caractérisée par le fait que** la paroi offre un bord (35) rabattu à 180° qui se loge dans le logement (23) sensiblement trapézoïdal.

10. Armoire selon la revendication 1, **caractérisée par le fait que** les branches latérales (12,13) de la patte d'oie (10) sont en légère obliquité et reliées aux sommets respectifs du noyau principal (11) par un décrochement de rigidité (15).

## Claims

1. Cabinet for electrical apparatus, comprising a framework formed of an assembly of section pieces, the cross section of at least some of the section pieces having the form of a crowsfoot bracket (10) comprising a polygonal internal main core (11) and three branches (12, 13, 14) which connect to the main core,
- the branches of the crowsfoot bracket (10) are directed towards the outside of the cabinet,
- the two lateral branches (12, 13) are more or less mutually perpendicular,
- the central branch (14) is extended towards the outside by a stiffening external core (20) as hollow and closed.

2. Cabinet according to Claim 1, **characterized in that** the section piece has a plane of symmetry (P) in which the central branch (14) of the crowsfoot bracket (10) is situated.

3. Cabinet according to Claim 2, **characterized in that** the main core (11) and the stiffening external core (20) are aligned along the plane of symmetry (P).

4. Cabinet according to Claim 2 or 3, **characterized in that** the main core (11) has a more or less square cross section, the diagonal of which is situated in the plane of symmetry.

5. Cabinet according to Claim 1, **characterized in that** the stiffening external core (20) has a more or less square cross section smaller than that of the main core (11).

6. Cabinet according to Claim 1, **characterized in that** the central branch (14) comprises two flanges (14a, 14b) which are contiguous.

7. Cabinet according to Claim 1, **characterized in that** the lateral branches (12, 13) have flanges (12a, 12b, 13a, 13b) separated from one another in such a way as to define, towards the outside, a land (12c, 13c) against which a fixed or opening wall of the cabinet can bear, and the stiffening external core (20) stands out with respect to the lands, the outstand (h) being greater than the thickness (e) of the wall.

8. Cabinet according to Claim 1, **characterized in that** the stiffening external core (20) defines, between itself and the face (12b, 13b) opposite it belonging to each lateral branch (12, 13) of the crowsfoot bracket (10), a housing (12) that is more or less trapezoidal and open to the outside via its base, the housing being formed in order to accommodate accessories for attaching fixed or opening walls and the edges of these walls.

9. Cabinet according to Claim 8, **characterized in that** the wall offers an edge (35) folded back at 180° and housed in the more or less trapezoidal housing (23) .

10. Cabinet according to Claim 1, **characterized in that** the lateral branches (12, 13) of the crowsfoot bracket (10) are slightly oblique and connected to the respective vertices of the main core (11) via a stiffening step (15).

## Patentansprüche

1. Schrank für Elektrogeräte mit einem Gerüst, das durch Zusammenbau von Profilteilen geformt wird, wobei der Querschnitt zumindest bestimmter der Profilteile die Form eines Dreiecksverbands (10) hat, der einen inneren polygonalen Hauptkern (11) und drei Schenkel (12, 13, 14) aufweist, die an den Hauptkern anschließen,
- die Schenkel des Dreiecksverbands (10) zur Außenseite des Schranks gerichtet sind,
- die zwei Seitenschenkel (12, 13) im Wesentlichen lotrecht zueinander sind,
- der Mittelschenkel (14) sich nach außen durch einen äußeren Versteifungskern (20) erweitert, **dadurch gekennzeichnet, dass** er geschlossen und hohl ist.

2. Schrank nach Anspruch 1, **dadurch gekennzeichnet, dass** das Profilteil eine Symmetrieebene (P) aufweist, in der sich der Mittelschenkel (14) des Dreiecksverbands (10) befindet.

3. Schrank nach Anspruch 2, **dadurch gekennzeichnet, dass** der Hauptkern (11) und der äußere Versteifungskern (20) gemäß der Symmetrieebene (P) fluchtend ausgerichtet sind.

4. Schrank nach Anspruch 2 oder 3, **dadurch gekennzeichnet, dass** der Hauptkern (11) einen im Wesentlichen quadratischen Querschnitt hat, dessen Diagonale sich in der Symmetrieebene befindet.

5. Schrank nach Anspruch 1, **dadurch gekennzeichnet, dass** der äußere Versteifungskern (20) einen im Wesentlichen quadratischen und kleineren Querschnitt hat als derjenige des Hauptkerns (11).

6. Schrank nach Anspruch 1, **dadurch gekennzeichnet, dass** der Mittelschenkel (14) zwei Flügel (14a, 14b) aufweist, die aneinander grenzen.

7. Schrank nach Anspruch 1, **dadurch gekennzeichnet, dass** die Seitenschenkel (12, 13) Flügel (12a, 12b, 13a, 13b) aufweisen, die voneinander getrennt sind, um nach außen ein Auflageflächenelement (12c, 13c) für eine feste oder sich öffnende Wand des Schranks zu bilden, und der äußere Versteifungskern (20) bezüglich der Flächenelemente nach außen auskragt, wobei die Auskragung (h) größer ist als die Dicke (e) der Wand.

8. Schrank nach Anspruch 1, **dadurch gekennzeichnet, dass** der äußere Versteifungskern (20) zwischen sich und der gegenüberliegenden Seite (12b, 13b) jedes Seitenschenkels (12, 13) des Dreiecksverbands (10) einen im Wesentlichen trapezförmigen und über seine Basis nach außen offenen Sitz (21) bildet, wobei der Sitz ausgelegt ist, um Befestigungszubehörteile für feste oder sich öffnende Wände und der Ränder dieser Wände aufzunehmen.

9. Schrank nach Anspruch 8, **dadurch gekennzeichnet, dass** die Wand einen um 180° umgeschlagenen Rand (35) aufweist, der sich in den im Wesentlichen trapezförmigen Sitz (23) einfügt.

10. Schrank nach Anspruch 1, **dadurch gekennzeichnet, dass** die Seitenschenkel (12, 13) des Dreiecksverbands (10) leicht schräg und mit den jeweiligen Ecken des Hauptkerns (11) über einen Steifheitsabsatz (15) verbunden sind.
